# EUROPÄISCHE PATENTSCHRIFT

(11) **EP 1 838 186 B1**
(45) Veröffentlichungstag und Bekanntmachung des Hinweises auf die Patenterteilung: **18.03.2009**
(21) Anmeldenummer: 06706308.1
(22) Anmeldetag: 19.01.2006
(51) Int. Cl.: A47J 36/02

(54) **EINWEGBEHÄLTER FÜR FRITTIERÖL ODER FRITTIERFETT UND DAMIT AUSGERÜSTETE FRITTEUSE**
DISPOSABLE CONTAINER FOR DEEP FRYING OIL OR DEEP FRYING FAT, AND DEEP FAT FRYER COMPRISING THE SAME
CONTENANT JETABLE POUR HUILE OU GRAISSE DE FRITURE ET FRITEUSE DOTEE DE CE CONTENANT

(30) Priorität: 19.01.2005 DE 202005000859 U
(43) Veröffentlichungstag der Anmeldung: 03.10.2007
(73) Patentinhaber: 3rd Angle (U.K.) Ltd., Highley, Shropshire WV16 6NN (GB)
(72) Erfinder: CURRIE, Neil, Anthony, DY13 0NA Stourport-on-Severn, Worcestershire (GB)
(74) Vertreter: Reitstötter - Kinzebach
(86) Internationale Anmeldenummer: PCT/EP2006/000453
(87) Internationale Veröffentlichungsnummer: WO 2006/077118

(56) Entgegenhaltungen:
- EP-A- 1 576 915
- WO-A-00/53505
- WO-A-20/04069016
- DE-A1- 2 503 328
- US-A- 2 944 719
- US-A- 3 539 360

## Beschreibung

Die Erfindung betrifft einen Einwegbehälter für Frittieröl oder Frittierfett, sowie eine Friteuse mit einem solchen Einwegbehälter.

Bei herkömmlichen Friteusen nimmt ein Frittiergefäß ein Frittiermedium, beispielsweise Frittierfett oder Frittieröl auf, welches durch eine Heizeinrichtung gegebenenfalls zunächst geschmolzen und anschließend auf eine Temperatur von beispielsweise 100 - 200°C, insbesondere von 150 - 190°C erhitzt wird. In dem erhitzten Frittieröl können unterschiedlichste, hier als Frittiergut bezeichnete Nahrungsmittel, wie Fleisch, Fisch, Zwiebelringe, Pilze, Gemüse, Chips oder ähnliches innerhalb von wenigen Minuten frittiert werden. Der Begriff "frittieren" umfasst im vorliegenden Zusammenhang jegliche Art der Nahrungszubereitung in heißem Fett oder Öl, wie beispielsweise Braten, Backen oder Garen. Üblicherweise benutzt man zum Frittieren einen das Frittiergut aufnehmenden Korb, der beispielsweise aus einem Drahtgeflecht bestehen kann. Der Korb gewährleistet, dass das Frittiergut sicher und problemlos in das heiße Öl oder Fett eingetaucht und nach Beendigung des Frittiervorgangs wieder entnommen werden kann. Das überschüssige Fett oder Öl kann durch das Drahtgeflecht abtropfen.

Wenn im Folgenden in erster Linie von einem Frittieröl oder einem Frittierfett die Rede ist, so sollen damit nicht nur bei Raumtemperatur flüssige bzw. feste Fette bezeichnet werden, sonder auch Fette, die bei Raumtemperatur beispielsweise eine pastöse oder gelartige Konsistenz besitzen.

Zahlreiche Fritteusen weisen eine Heizeinrichtung auf, die fest mit dem Frittiergefäß verbunden ist. Die Heizeinrichtung ist häufig unter dem Boden des Frittiergefäßes angeordnet, so dass zunächst das Frittiergefäß und anschließend das in dem Frittiergefäß befindliche Fett oder Öl erhitzt wird. Es sind auch Frittiergefäße bekannt geworden, bei denen die Heizeinrichtung im Inneren des Frittiergefäßes angeordnet ist. Vorteile dieses Gerätetyps sind darin zu sehen, dass die Heizeinrichtung direkt mit dem Frittieröl oder- fett im Kontakt steht, so dass ein schnelleres Aufheizen des Frittiermediums gewährleistet ist. Die Heizeinrichtung ist typischerweise als Heizspirale ausgebildet, so dass kleinere Restpartikel des Frittiergutes an dem Heizkörper vorbei auf den Boden des Frittiergefäßes sinken können. Derartige Partikel oder Speisereste befinden sich dann nicht mehr in unmittelbarer Nähe des Heizkörpers, sondern im kühleren Bodenbereich des Frittiergefäßes. Bei anschließenden Frittierprozessen verbrennen und zersetzen sich derartige Reste in deutlich geringerem Umfang, als dies beispielsweise bei Frittiergefäßen mit Bodenheizung der Fall ist. Das Frittieröl oder -fett kann dann länger benutzt werden, weil es weniger stark durch Zersetzungsprodukte von Speiseresten belastet wird.

Früher oder später muss aber bei allen bekannten Frittiergeräten das verbrauchte Frittieröl oder Frittierfett gegen frisches Frittiermedium ausgetauscht werden.

Dabei muss der Benutzer üblicherweise warten, bis das Öl in dem Frittiergefäß weitgehend abgekühlt ist, damit Verbrennungsgefahren vermieden werden. Bei den weit verbreiteten Fritteusen ohne Ablassöffnung für das Öl muss die komplette Fritteuse angehoben und das Öl über die obere Öffnung des Frittiergefäßes in einen Auffangbehälter geschüttet werden. Dies ist nicht nur auf Grund des Gewichts und der Abmessungen einer Fritteuse sehr umständlich, sondern, insbesondere in Fällen, in denen das Frittiermedium noch nicht vollständig abgekühlt ist, auch mit erheblicher Verletzungsgefahr durch das heiße Öl verbunden.

Es sind jedoch bereits Fritteusen bekannt geworden, die eine verschließbare Öffnung zum Ablassen des Frittieröls umfassen. Derartige verschließbare Öffnungen können beispielsweise vom Benutzer über einen Kugelhahn betätigt werden. Bei unsachgemäßer Handhabung besteht aber die Gefahr, dass der Benutzer mit dem gegebenenfalls noch heißen Frittieröl in Kontakt kommt und sich erhebliche Verbrennungen zuzieht. In dem US-Patent Nr. 6,085,641 wird eine derzeit auch kommerziell erhältliche Fritteuse beschrieben, welche eine Öffnung zum Ablassen des Frittieröls umfasst, die durch einen flexiblen Schlauch verlängert wird. Bei bestimmungsgemäßer Benutzung der Fritteuse wird der Schlauch durch eine schwenkbare Platte an der Stirnfläche der Fritteuse abgeknickt, so dass die Öffnung verschlossen ist. Zum Ablassen des Frittieröls mit die Platte aufgeklappt, so dass der Schlauch in ein Auffanggefäß geleitet werden kann. Auch bei dieser bekannten Fritteuse besteht die Gefahr, dass Frittieröl unkontrolliert auslaufen kann, was zumindest zu unerwünschten Verschmutzungen in der Küche führt und bei versehentlichem Ablassen von heißem Frittieröl wiederum die Gefahr von Verbrennungen in sich birgt.

Außerdem ist bekannt, das viele Nutzer das Öl nicht sachgerecht entsorgen, sondern einfach in den Ausguss gießen, was nicht nur zu verstopften Abflussrohren führen kann, sondern auch eine unnötige Umweltbelastung darstellt.

In der internationalen Patentanmeldung WO 2004/069016 der Anmelderin, auf welche die vorliegende Anmeldung in vollem Umfang Bezug nimmt, wird vorgeschlagen, dass Frittieröl oder Frittierfett nicht wie bei herkömmlichen Friteusen direkt in das Frittiergefäß der Friteuse zu füllen und dort zu erhitzen, sondern in einem hitzebeständigen Einwegbehälter in dem Frittiergefäß anzuordnen. Sobald das Fett oder Öl verbraucht ist und durch frisches Frittiermedium ersetzt werden muss, kann der Nutzer den Einwegbehälter mit dem verbrauchten Frittiermedium aus dem Frittiergefäß herausnehmen und durch einen neuen Einwegbehälter mit frischem Öl oder Fett ersetzen. Der Einwegbehälter mit dem verbrauchten Öl kann anschließend sachgerecht in umweltfreundlicher Weise in einem Recyclingcenter oder einem Wertstoffhof entsorgt werden. In WO 2004/069016 wird außerdem vorgeschlagen, den Einwegbehälter bereits als Verpackung für das neue Öl oder Fett zu nutzen, so dass weder beim Ersteinsatz noch bei der Entsorgung in Umfüllen des Öls oder Fetts erforderlich ist. Ein weiterer Vorteil der Verwendung eines Einwegbehälters besteht darin, dass die Friteuse einfach zu reinigen ist, da am Frittiergefäß selbst keine oder nur geringfügige Verschmutzungen auftreten.

Der vorliegenden Erfindung liegt das technische Problem zu Grunde, einen besonders einfach und sicher handhabbaren Einwegbehälter für das in WO 2004/069016 beschriebene Verfahren bereitzustellen.

Gelöst wird dieses technische Problem durch den Einwegbehälter mit den Merkmalen des beigefügten Anspruchs 1. Vorteilhafte Weiterbildungen der Erfindung werden in den abhängigen Ansprüchen beschrieben.

Die Erfindung betrifft demnach einen Einwegbehälter für Frittieröl oder Frittierfett, der einen verschließbaren unteren Bereich, der von einem Boden und Seitenwänden gebildet wird und einen oberen Bereich umfasst, wobei der obere Bereich eine erste Stellung, in der er im wesent!ichen an dem unteren Bereich anliegt, und eine zweite Stellung, in der er die Seitenwände des unteren Bereichs nach oben verlängert, einnehmen kann. Die erste Stellung entspricht dabei der Lagerungs- oder Verkaufskonfiguration des Einwegbehälters, da so der Platzbedarf des Behälters minimiert ist und im Wesentlichen nur von der Menge an enthaltenem Frittieröl oder Frittierfett bestimmt wird. In der zweiten Stellung verlängert der Einwegbehälter die Seitenwände des unteren Bereichs nach oben, so dass der Einwegbehälter nun als Frittiergefäß mit ausreichender Tiefe dienen kann, bei dem die Oberfläche des enthaltenen Öls oder Fetts durch den oberen Bereich des Einwegbehälters deutlich überragt wird, so dass keine Gefahr besteht, dass bei Benutzung Öl oder Fett aus dem Einwegbehälter überschwappt oder herausspritzt.

Vorzugsweise wird das Frittieröl oder Frittierfett in dem unteren Bereich des Einwegbehälters konditioniert. Der Einwegbehälter mit frischem Frittieröl oder Frittierfett ist vorzugsweise durch ein lösbares Verschlussmittel verschlossen. Das Verschlussmittel ist vorzugsweise in der Nähe des oberen Randes der Seitenwände des unteren Bereichs angeordnet. Besonders bevorzugt ist das Verschlussmittel eine Abziehfolie, die beispielsweise mit den Rändern der Seitenwände verklebt oder verschweißt sein kann.

Vorteilhaft besteht der gesamte Einwegbehälter, zumindest aber der in Kontakt mit heißem Frittieröl oder Frittierfett kommende untere Bereich des Einwegbehälters aus einem hitzebeständigen Material, beispielsweise aus Metall, wie etwa Aluminium, oder einem hitzebeständigen Kunststoff. Auch der obere Bereich besteht vorzugsweise aus Metall oder Kunststoff, kann aber auch aus beschichteter oder unbeschichteter Kartonage oder ähnlichem bestehen.

Der Einwegbehälter kann in Friteusen angeordnet werden, die mit einem Eintauchheizelement versehen sind. Ebenso ist der Einwegbehälter in Friteusen einsetzbar, die eine Bodenheizung aufweisen, auf die der Behälter gestellt werden kann. In diesem Fall besteht der Boden des unteren Bereichs des Einwegbehälters vorzugsweise aus einem gut wärmeleitenden Material.

Gemäß einer ersten Ausführungsform der Erfindung ist der obere Bereich des Einwegbehälters als vertikal verschiebbarer Kragen ausgebildet, der in der ersten Stellung die Seitenwände des unteren Bereichs ringförmig umgibt und so praktisch keinen zusätzlichen Platz benötigt. Vor Benutzung kann der Kragen nach oben in die zweite Stellung verschoben werden, in der die Unterkante des Kragens im Wesentlichen im Bereich der Oberkante der Seitenwände des unteren Bereichs fixiert ist. Hierzu können die Seitenwände und der Kragen mit komplementären Haltemitteln, beispielsweise einem Einschnappring, versehen sein. Im Bereich der Haltemittel sind dann vorzugsweise auch Dichtmittel, wie etwa Dichtungsringe, vorgesehen, die verhindern, dass Öl oder Fett aus dem Übergang vom unteren zum oberen Bereich austreten kann.

Gemäß einer besonders bevorzugten Ausführungsform besteht der obere Bereich des Einwegbehälters aus faltbaren Folienstreifen, die unmittelbar mit dem unteren Bereich verbunden sind, so dass keinerlei Leckage auftreten kann.

Diese Folienstreifen können beispielsweise in der ersten Stellung seitlich umgeklappt werden, so dass sie im Wesentlichen parallel zu den Seitenwänden des unteren Bereichs liegen. Besonders bevorzugt werden aber die Folienstreifen in der ersten Stellung über der Oberseite des unteren Bereichs flach zusammengefaltet. In der zweiten Stellung können die Folienstreifen so auseinandergefaltet werden, dass sie die Seitenwände des unteren Bereichs nach oben verlängern.

In der ersten Stellung, die der Lagerungs- und Verkaufskonfiguration des Einwegbehälters entspricht, können die zusammengefalteten Folienstreifen von einem Sicherungsmittel gehalten werden. Als Sicherungsmittel eignet sich beispielsweise ein Schnappdeckel oder ein Papier- oder Kartonband, das den Einwegbehälter mit den zusammengefalteten Folienstreifen umfasst. Es ist außerdem möglich, zusätzlich zu einem Schnappdeckel einen die gesamte Anordnung umfassendes Papierband vorzusehen.

Der Einwegbehälter ist vorzugsweise aus einer Aluminiumfolie geformt, beispielsweise gefaltet. Den unteren Bereich des Einwegbehälters kann man beispielsweise auch durch Tiefziehen formen. Vorzugsweise ist der untere Bereich formstabil und weist Abmessungen auf, die im Wesentlichen der Abmessungen der Ausnehmung des Frittiergefäßes der Friteuse entsprechen.

Die Erfindung betrifft außerdem eine Friteuse mit wenigstens einem zur Aufnahme von Frittieröl oder Frittierfett vorgesehenen Frittiergefäß und einer Heizeinrichtung zum Erhitzen des Frittieröls. Die erfindungsgemäße Friteuse ist dadurch gekennzeichnet, dass das Frittieröl oder Frittierfett in einem herausnehmbaren Einwegbehälter der oben beschriebenen Art in dem Frittiergefäß angeordnet ist.

Der Einwegbehälter kann an die Form der Frittiergefäße von bereits existierenden Friteusen angepasst werden, so dass auch herkömmlich Friteusen im Sinne der Erfindung nachrüstbar sind. Neue Friteusen, die speziell auf die Verwendung eines Einwegbehälters ausgelegt sind, können mit Frittiergefäßen aus kostengünstigeren Materialien ausgerüstet sein, da die Gefäße keiner abrasiven Reinigung mehr widerstehen müssen. Anstelle von Frittiergefäßen aus Edelstahl, emailliertem Stahl, oder Aluminium mit Antihaftbeschichtung können einfache, dünnwandige Stahlgefäße mit einer einfachen Schutzschicht oder unbeschichtete Aluminiumgefäße verwendet werden.

Die Erfindung wird im Folgenden unter Bezugnahme auf in den beigefügten Zeichnungen dargestellte Ausführungsbeispiele näher erläutert.

In den Zeichnungen zeigen:
- Figur 1: eine Fritteuse mit einer nichterfindungsgemäßen Variante des Einweg- behälters für Frittieröl oder Frittierfett;
- Figuren 2-9: eine erste Ausführungsform eines erfindungsgemäßen Einwegbehäl- ters;
- Figur 10: eine Variante des Einwegbehälters der Figur 9;
- Figur 11: eine weitere Variante des Einwegbehälters der Figur 9;
- Figur 12: eine Variante des Einwegbehälters der Figur 6;
- Figur 13: eine weitere Variante des Einwegbehälters der Figur 6; und
- Figur 14: eine zweite Ausführungsform eines erfindungsgemäßen Einwegbehäl- ters.

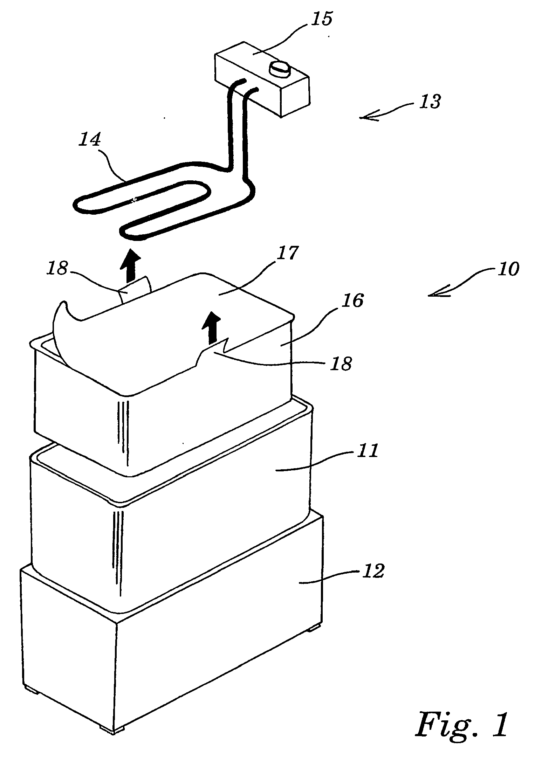

In Figur 1 ist eine Fritteuse 10 aus der WO 2004/069016 der Anmelderin in einer Explosionsdarstellung wiedergegeben. Die Fritteuse 10 besteht aus einem Frittiergefäß 11, das von einem Gehäusemantel 12 umgeben ist. In das Frittiergefäß 11 wird herkömmlicherweise Frittieröl oder Frittierfett gefüllt, das über eine in das Frittiergefäß 11 eintauchende Heizeinrichtung 13 erhitzt wird. Die Heizeinrichtung 13 weist ein Heizelement 14, sowie ein Steuergerät 15 zur Regelung der Heizleistung auf. Der isolierende Gehäusemantel 12 verhindert, dass der Benutzer direkt mit dem heißen Frittiergefäß in Kontakt kommt. Das Frittieröl oder Frittierfett wird nicht direkt in das Frittiergefäß 11 gefüllt, sondern es wird in einem gleichzeitig als Verpackung dienenden Einwegbehälter 16 in das Frittiergefäß 11 eingesetzt. Das frische Frittieröl oder Frittierfett ist vor der ersten Benutzung durch eine abziehbare Schutzfolie 17 vor Verschmutzung geschützt. Die Schutzfolie muss, wie in Figur 1 bereits angedeutet, abgezogen werden, bevor die Heizeinrichtung 13 eingesetzt werden kann. Zum leichteren Einsetzen und Herausnehmen des Einwegbehälters 16 aus dem Frittiergefäß 11 weist der Behälter 16 seitliche Laschen oder Griffe 18 auf, die - bei eingesetztem Einwegbehälter - über den oberen Rand des Frittiergefäßes hinausragen. Nach dem Abziehen der Schutzfolie 17 und dem Einsetzen der Heizeinrichtung 13 ist die Fritteuse betriebsbereit und das Öl oder Fett kann erhitzt werden. Die zu frittierenden Nahrungsmittel werden nach Erhitzen des Öl, wie bei herkömmlichen Friteusen auch, in einem (hier nicht dargestellten) Frittierkorb in das Öl hinabgelassen. Der wesentliche Unterschied zu herkömmlichen Friteusen besteht darin, dass sich bei der erfindungsgemäßen Fritteuse, das heiße Öl immer noch in dem Einwegbehälter 16 befindet. Wenn das Öl nach mehrmaliger Benutzung verbraucht ist, also insbesondere einen zunehmenden Anteil von Zersetzungsprodukten von Nahrungsmittelresten enthält, wird der Einwegbehälter 16 aus dem Frittiergefäß 11 herausgenommen und das Öl kann in dem Einwegbehälter 16 entsorgt werden.

Der Einwegbehälter 16 der Figur 1 kann aus sowohl aus praktischen als auch aus sicherheitstechnischen Erwägungen nicht bis zum Rand mit Frittieröl gefüllt werden, so dass ein solcher Behälter im Verkauf und bei der Lagerung viel Platz benötigt. Wie im folgenden erläutert wird, überwindet der erfindungsgemäße Einwegbehälter diesen Nachteil.

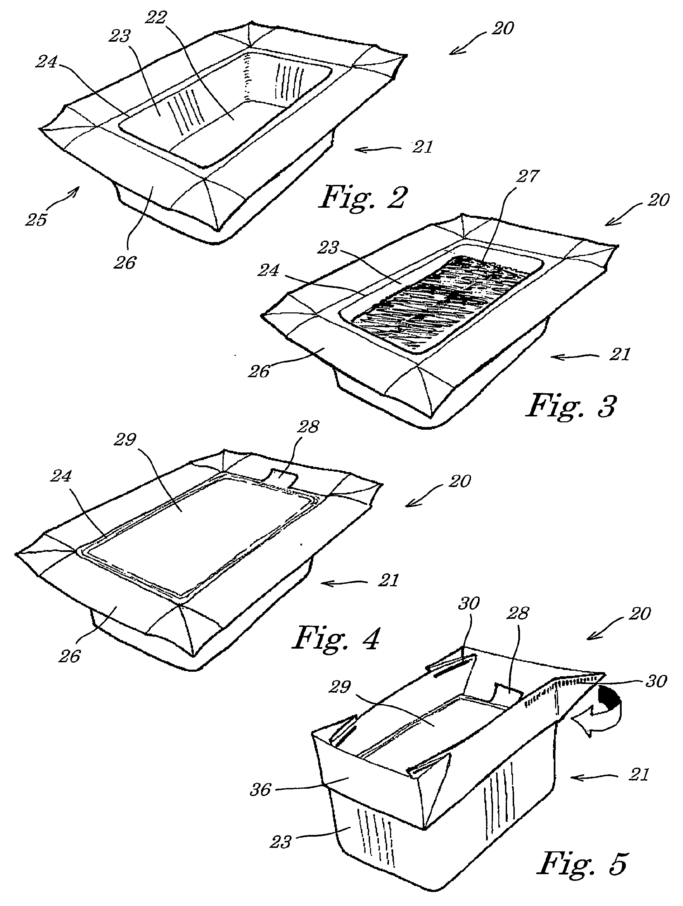

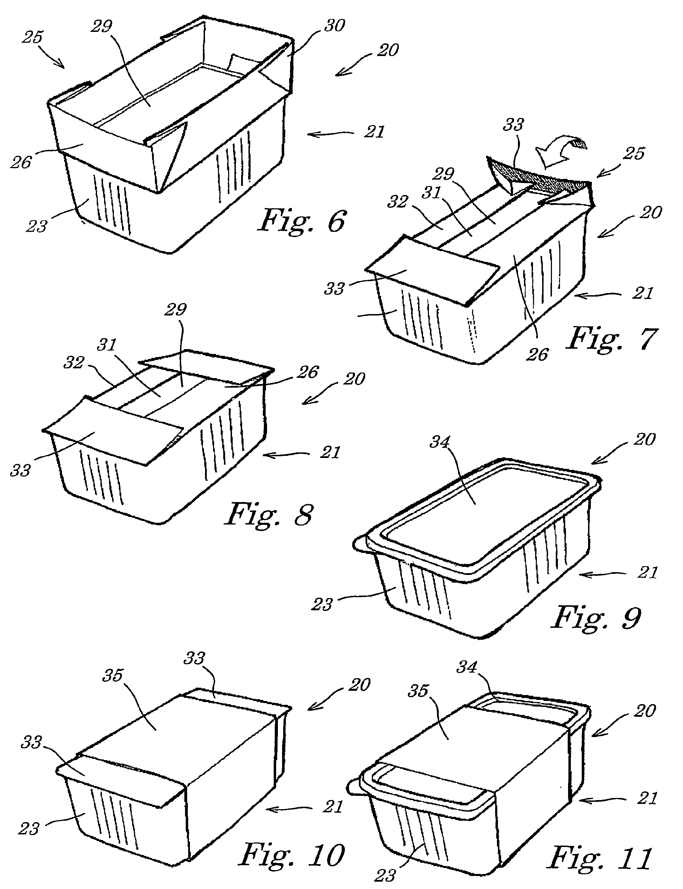

Die Figuren 2-11 zeigen eine erste Ausführungsform des erfindungsgemäßen Einwegbehälters. Figur 1 zeigt den Einwegbehälter 20 nach seiner Herstellung. Der untere formbeständige Bereich 21, der zur Aufnahme von Frittieröl oder Frittierfett dient ist im dargestellten Beispiel eine tiefgezogene Aluminiumschale, die aus einem Boden 22 und Seitenwänden 23 besteht, die das Volumen des unteren Bereichs definieren. An die Oberkante 24 der Seitenwände 23 des unteren Bereichs 21 schließt sich ein faltbarer oberer Bereich 25 an, der im dargestellten Beispiel als einstückiger umlaufender Ring 26 ausgebildet und im dargestellten Zustand noch seitlich weggeklappt ist. In der Darstellung der Figur 3 wurde der erfindungsgemäße Einwegbehälter 20 mit frischem Frittieröl 27 gefüllt. Das Frittieröl kann bis knapp an die Oberkante 24 der Seitenwände 23 des unteren Bereichs heranreichen. Wie in Figur 4 gezeigt, wird der untere Bereich 21 nach Befüllen mit Frittieröl 27 durch eine mit einer Lasche 28 versehene Abziehfolie 29 verschlossen. Die Abziehfolie 29 kann mit den Oberkanten 24 der Seitenwände 23 des unteren Bereichs verklebt oder verschweißt werden. Anschließend wird, wie in Figur 5 dargestellt, der den oberen Bereich 25 des Einwegbehälters bildende Ring 26 so zusammengefaltet und an den Ecken 30 permanent verklebt, dass der obere Bereich 25 eine Verlängerung der Seitenwände 23 des unteren Bereichs 21 bildet. Der nach Verkleben der Ecken 30 resultierende Zustand ist in Figur 6 dargestellt. Schließlich wird, wie in Figur 7 dargestellt, der obere Bereich 25 so gefaltet, dass er, wie in Figur 8 dargestellt ist, im Wesentlichen flach auf der Oberseite 31 der den unteren Bereich 21 bedeckenden Abziehfolie 29 aufliegt und somit im Vergleich zum unteren Bereich 21 selbst praktisch keinen zusätzlichen Platz beansprucht. Die durch das Umfalten gebildeten Flügel 32, 33 des oberen Bereichs können gegebenenfalls durch einzelne Klebepunkte lösbar fixiert werden, so dass sich die Flügel vor der Benutzung von selbst nicht öffnen können. Alternativ oder zusätzlich kann der Einwegbehälter 20 , wie in Figur 9 dargestellt, durch einen Deckel, beispielsweise einen Kunststoffdeckel 34, verschlossen werden, auf den beispielsweise Produktinformationen gedruckt werden können. Wie in den Figuren 10 und 11 dargestellt kann an Stelle des Kunststoffdeckels 34 (Figur 10) oder zusätzlich zu dem Kunststoffdeckel 34 (Figur 11) ein Papierband 35 als Sicherungsmittel vorgesehen sein.

Der Benutzer kauft den erfindungsgemäßen Einwegbehälter mit frischem Öl in der in den Figuren 9, 10 oder 11 dargestellten Anordnung, öffnet das Papierband 35 und/oder den Plastikdeckel 34 und entfaltet den oberen Bereich 25 des Einwegbehälters, so dass der Einwegbehälter 20 in der in Figur 6 dargestellten Form annimmt. Anschließend wird die Abziehfolie 29 entfernt und der Einwegbehälter 20 kann in das Frittiergefäß einer Friteuse eingesetzt werden.

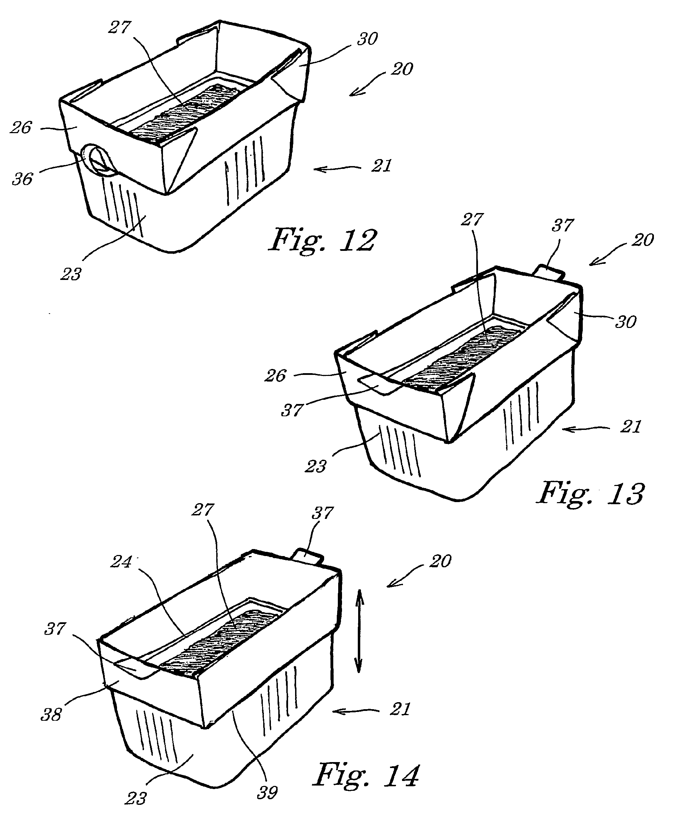

Hierzu kann es vorteilhaft sein, dass der erfindungsgemäße Einwegbehälter 20 mit Halteschlaufen 36 oder Laschen 37 im Bereich des Übergangs vom unteren zum oberen Bereich oder an der Oberkante des oberen Bereichs versehen ist (vergleiche die in den Figuren 12 und 13 dargestellten Varianten des erfindungsgemäßen Einwegbehälters).

In Figur 14 ist schließlich eine zweite Ausführungsform des erfindungsgemäßen Einwegbehälters 20 dargestellt, bei welcher der obere Bereich 25 aus einem, wie durch den Pfeil angedeutet, vertikal verschiebbaren, Kragen 38 gebildet wird, der in Figur 14 in der zweiten Stellung dargestellt ist. In der ersten Stellung umgibt der Kragen 38 die Außenseite der Seitenwände 23 und ragt praktisch nicht über deren Oberkante hinaus, so dass auch die zweite Ausführungsform eine sehr kompakte Lagerung des Einwegbehälters erlaubt. In der zweiten Stellung ist der Kragen 38 mit seiner Unterkante 39 im Bereich der Oberkanten 24 der Seitenwände 23 dicht fixiert.

Wenn das Frittieröl oder Frittierfett verbraucht ist, nimmt der Benutzer den Einwegbehälter mit dem verbrauchten Öl oder Fett aus dem Frittiergefäß heraus, faltet den oberen Bereich 25 des Einwegbehälters wieder zusammen, nachdem er gegebenenfalls vorher die Abziehfolie 29 oder ein anderes Verschlussmittel wieder auf den unteren Bereich aufgebracht hat und kann die komplette Anordnung aus Einwegbehälter mit verbrauchtem Frittieröl mit dem gegebenenfalls vorhandenen Kunststoffdeckel 34 verschließen und entsorgen.

## Patentansprüche

1. Einwegbehälter für Frittieröl oder Frittierfett, der einen verschließbaren unteren Bereich (21) und einen oberen Bereich (25) umfasst,
wobei der untere Bereich (21) zumindest von einem Boden (22) und Seitenwänden (23) gebildet wird, ein Frittieröl oder ein Frittierfett enthält und ein lösbares Verschlussmittel (29) umfasst, das eine von den Oberkanten (24) der Seitenwänden (23) definierte obere Öffnung der Oberseite (31) des unteren Bereichs (21) verschließt,
und wobei der obere Bereich (25) eine erste Stellung, in der er im wesentlichen an dem unteren Bereich (21) anliegt, und eine zweite Stellung in der er die Seitenwände (23) des unteren Bereichs (21) nach oben verlängert, einnehmen kann.

2. Einwegbehälter gemäß Anspruch 1, **dadurch gekennzeichnet, dass** das Verschlussmittel eine Abziehfolie (29) ist.

3. Einwegbehälter gemäß einem der Ansprüche 1 oder 2, **dadurch gekennzeichnet, dass** zumindest der untere Bereich (21) aus einem hitzebeständigen Material besteht.

4. Einwegbehälter gemäß einem der Ansprüche 1 bis 3, **dadurch gekennzeichnet, dass** der Boden (22) des unteren Bereichs (21) aus einem wärmeleitenden Material besteht.

5. Einwegbehälter gemäß einem der Ansprüche 1 bis 4, **dadurch gekennzeichnet, dass** der obere Bereich (25) einen verschiebbaren Kragen (38) umfasst, der in der ersten Stellung die Seitenwände (23) des unteren Bereichs (21) umgibt und in der zweiten Stellung mit seiner Unterkante (39) im Bereich der Oberkanten (24) der Seitenwände (23) fixiert ist.

6. Einwegbehälter gemäß einem der Ansprüche 1 bis 4, **dadurch gekennzeichnet, dass** der obere Bereich (25) aus faltbaren Folienstreifen (26) besteht.

7. Einwegbehälter gemäß Anspruch 6, **dadurch gekennzeichnet, dass** die Folienstreifen (26) in der ersten Stellung auf der Oberseite (31) des unteren Bereichs (21) flach zusammengefaltet sind und in der zweiten Stellung die Seitenwände (23) des unteren Bereichs (21) nach oben verlängern.

8. Einwegbehälter gemäß Anspruch 7, **dadurch gekennzeichnet, dass** die in der ersten Stellung zusammengefalteten Folienstreifen (26) von einem Sicherungsmittel (34,35) gehalten werden

9. Einwegbehälter gemäß Anspruch 8, **dadurch gekennzeichnet, dass** das Sicherungsmittel einen Schnappdeckel (34) umfasst.

10. Einwegbehälter gemäß einem der Ansprüche 8 oder 9, **dadurch gekennzeichnet, dass** das Sicherungsmittel ein Papierband (35) umfasst.

11. Einwegbehälter gemäß einem der Ansprüche 1 bis 10, **dadurch gekennzeichnet**, das er aus einer Aluminiumfolie geformt ist.

12. Fritteuse mit wenigstens einem zur Aufnahme von Frittieröl oder Frittierfett vorgesehenen Frittiergefäß (11) und einer Heizeinrichtung (13) zum Erhitzen des Frittieröls,
**dadurch gekennzeichnet,**
**dass** das Frittieröl oder Frittierfett in einem herausnehmbaren Einwegbehälter (20) gemäß einem der Ansprüche 1 bis 11 in dem Frittiergefäß (11) angeordnet ist.

## Claims

1. Single-use container for frying oil or frying fat which comprises a sealable lower part (21) and an upper part (25),
wherein the lower part (21) is formed at least by a base (22) and side walls (23), contains a frying oil or a frying fat and comprises releasable sealing means (29) that close off an upper opening of the top (31) of the lower part (21), said opening being defined by the upper edges (24) of the side walls (23),
and wherein the upper part (25) can assume a first position in which it abuts substantially on the lower part (21), and a second position in which it extends the side walls (23) of the lower part (21) upwards.

2. Single-use container according to claim 1, **characterised in that** the closure means are a tear-off foil (29).

3. Single-use container according to one of claims 1 or 2, **characterised in that** at least the lower part (21) consists of a heat-resistant material.

4. Single-use container according to one of claims 1 to 3, **characterised in that** the base (22) of the lower part (21) consists of a heat-conducting material.

5. Single-use container according to one of claims 1 to 4, **characterised in that** the upper part (25) comprises a movable collar (38) which in the first position surrounds the side walls (23) of the lower part (21) and in the second position is fixed with its lower edge (39) in the region of the upper edges (24) of the side walls (23).

6. Single-use container according to one of claims 1 to 4, **characterised in that** the upper part (25) consists of foldable foil strips (26).

7. Single-use container according to claim 6, **characterised in that** in the first position the foil strips (26) are folded together flat on the top (31) of the lower part (21) and in the second position they extend the side walls (23) of the lower part (21) upwards.

8. Single-use container according to claim 7, **characterised in that** the foil strips (26) folded together in the first position are held by securing means (34, 35).

9. Single-use container according to claim 8, **characterised in that** the securing means comprise a snap-on lid (34).

10. Single-use container according to one of claims 8 or 9, **characterised in that** the securing means comprise a paper strip (35).

11. Single-use container according to one of claims 1 to 10, **characterised in that** it is formed from an aluminium foil.

12. Deep-fat fryer having at least one frying bowl (11) designed to hold frying oil or frying fat and a heater (13) for heating the frying oil,
**characterised in that** the frying oil or frying fat is held in a removable single-use container (20) according to one of claims 1 to 11 arranged in the frying bowl (11).

## Revendications

1. Récipient à usage unique pour huile de friture ou graisse de friture, comprenant une zone inférieure refermable (21) et une zone supérieure (25),
dans lequel la zone inférieure (21) est formée au moins par un fond (22) et des parois latérales (23), contient une huile de friture ou une graisse de friture et comprend des moyens de fermeture amovibles (29) qui ferment une ouverture supérieure, définie par les parois latérales (23), du côté supérieur (31) de la zone inférieure (21),
et dans lequel la zone supérieure (25) peut adopter une première position dans laquelle elle s'applique essentiellement contre la zone inférieure (21) et une deuxième position dans laquelle elle prolonge les parois latérales (23) de la zone inférieure (21) vers le haut.

2. Récipient à usage unique selon la revendication 1, **caractérisé en ce que** les moyens de fermeture sont une feuille détachable (29).

3. Récipient à usage unique selon l'une quelconque des revendications 1 ou 2, **caractérisé en ce qu'**au moins la zone inférieure (21) se compose d'un matériau résistant à la chaleur.

4. Récipient à usage unique selon l'une quelconque des revendications 1 à 3, **caractérisé en ce que** le fond (22) de la zone inférieure (21) se compose d'un matériau thermoconducteur.

5. Récipient à usage unique selon l'une quelconque des revendications 1 à 4, **caractérisé en ce que** la zone entoure dans la première position les parois latérales (23) de la zone inférieure (21) et est fixée dans la deuxième position par son bord inférieur (39) au niveau des bords supérieurs (24) des parois latérales (23).

6. Récipient à usage unique selon l'une quelconque des revendications 1 à 4, **caractérisé en ce que** la zone supérieure (25) est constituée de bandes de feuille pliantes (26) .

7. Récipient à usage unique selon la revendication 6, **caractérisé en ce que** les bandes de feuille (26) sont repliées à plat dans la première position sur le côté supérieur (31) de la zone inférieure (21) et prolongent dans la deuxième position les parois latérales (23) de la zone inférieure (21) vers le haut.

8. Récipient à usage unique selon la revendication 7, **caractérisé en ce que** les bandes de feuille (26) repliées dans la première position sont maintenues par des moyens d'arrêt (34, 35).

9. Récipient à usage unique selon la revendication 8, **caractérisé en ce que** les moyens d'arrêt correspondent à un couvercle à encliqueter (34).

10. Récipient à usage unique selon la revendication 8 ou 9, **caractérisé en ce que** les moyens d'arrêt comprennent une bande de papier (35).

11. Récipient à usage unique selon l'une quelconque des revendications 1 à 10, **caractérisé en ce qu'**il est formé à partir d'une feuille d'aluminium.

12. Friteuse comprenant au moins une cuve de friture (11) prévue pour recevoir de l'huile de friture ou de la graisse de friture et un dispositif de chauffage (13) pour chauffer l'huile de friture,
**caractérisée en ce que** l'huile de friture ou la graisse de friture est disposée dans un récipient à usage unique amovible (20) selon l'une quelconque des revendications 1 à 11 dans la cuve de friture (11).
